# EUROPEAN PATENT APPLICATION

(11) **EP 3 718 829 A1**
(43) Date of publication of application: **07.10.2020**
(21) Application number: 18884536.6
(22) Date of filing: 28.11.2018
(51) Int. Cl.: B60R 13/04, B60J 5/04, B60R 1/00, C03B 27/00, C03C 3/087, C03C 17/00, C03C 21/00

(54) **DECORATIVE MEMBER**

(30) Priority: 29.11.2017 JP 2017229725
(71) Applicant: Nippon Sheet Glass Company, Limited, Tokyo 108-6321 (JP)
(72) Inventor: MATSUSHITA, Yoshimitsu, Tokyo 108-6321 (JP); FUJIWARA, Kazuhiro, Tokyo 108-6321 (JP); Takashi, Hajime, Tokyo 108-6321 (JP)
(74) Representative: Mewburn Ellis LLP
(86) International application number: PCT/JP2018/043883
(87) International publication number: WO 2019/107459

(57) **Abstract**

The present invention is a decorative member that is attachable to an outer surface of a vehicle, the decorative member including a glass plate that has a first main surface that faces an outer side of the vehicle, and a second main surface that faces an inner side of the vehicle; and a plate-shaped support member that is attached to at least the second main surface of the glass plate and is made of a resin material, in which the support member is configured to be attachable to the outer surface of the vehicle.

## Description

### Technical Field

The present invention relates to a decorative member.

### Background Art

In a vehicle, a portion where a front door and a rear door are adjacent to each other, that is, a rear end portion of an upper frame that supports a lifting window of the front door and a front end portion of the upper frame that supports a lifting window of the rear door are adjacent to each other, and this portion is referred to as a "center pillar". Also, there are cases where a decorative member called a garnish is attached to this center pillar (e.g., Patent Literature 1).

### Citation List

### Patent Literature

Patent Literature 1: JP 2017-30554A

### Summary of Invention

### Technical Problem

Incidentally, there are cases where a decorative member such as that described above degrades and becomes discolored because the outer surface of a vehicle is exposed to sunlight for a long period of time, and is exposed to wind and rain. In particular, the above-described decorative member degrades due to the decorative member being made of a resin material, and thus it is problematic in that the appearance thereof is likely to deteriorate. Note that such issues arise not only in decorative members that are attachable to center pillars but also in any decorative member that is attachable to the outer surface of a vehicle. The present invention was made to resolve the above-described issues, and an object thereof is to provide a decorative member capable of inhibiting deterioration of the appearance thereof due to degradation.

### Solution to Problem

Aspect 1: A decorative member that is attachable to an outer surface of a vehicle, the decorative member including:
a glass plate that has a first main surface that faces an outer side of the vehicle, and a second main surface that faces an inner side of the vehicle; and
a plate-shaped support member that is attached to at least the second main surface of the glass plate and is made of a resin material,
in which the support member is configured to be attachable to the outer surface of the vehicle.

Aspect 2: The decorative member according to Aspect 1, in which the glass plate is a tempered glass, and
the first main surface of the glass plate has a compressive stress of 400 MPa or more.

Aspect 3: The decorative member according to Aspect 2,
in which the glass plate is formed by chemical strengthening a glass article having a composition containing
SiO₂ in an amount of 60 mol% to 80 mol%,
Al₂O₃ in an amount of 1 mol% to 10 mol%,
MgO in an amount of 1 mol% to 20 mol%,
CaO in an amount of 1 mol% to 15 mol%,
Na₂O in an amount of 10 mol% to 20 mol%, and
K₂O in an amount of 0.1 mol% to 2 mol%.

Aspect 4: The decorative member according to any of Aspects 1 to 3,
in which the glass plate has a thickness of 2 mm or less.

Aspect 5: The decorative member according to any of Aspects 1 to 4, further including
a coating layer formed on the second main surface of the glass plate,
in which the glass plate is transparent.

Aspect 6: The decorative member according to Aspect 5,
in which the coating layer is formed to have a design, and is configured to be visible from the outside of the vehicle via the glass plate.

Aspect 7: The decorative member according to Aspect 5 or 6,
in which a portion of the coating layer is provided with a through-hole portion that is not coated,
a through-hole is formed in the support member to correspond to the through-hole portion, and
a camera provided in the vehicle is configured to be capable of capturing an image of the outside of the vehicle via the through-hole portion and the through-hole.

Aspect 8: The decorative member according to Aspect 5,
in which at least a portion of the coating layer is formed by a conductive film, and
the decorative member is configured to be capable of authenticating a fingerprint of a finger of a person that is in contact with the first main surface of the glass plate, through the conductive film.

Aspect 9: The decorative member according to any of Aspects 1 to 8,
in which the support member is formed to be in contact with at least a portion of an end surface of the glass plate that joins the first main surface and the second main surface.

Aspect 10: The decorative member according to any of Aspects 1 to 9,
in which the glass plate and the support member are formed as a single body.

Aspect 11: The decorative member according to any of Aspects 1 to 10,
in which the support member is configured to be attachable to a pillar of the vehicle.

### Advantageous Effects of Invention

With a decorative member according to the present invention, it is possible to inhibit deterioration of the appearance thereof due to degradation.

### Brief Description of Drawings

FIG. 1 is a partial side view of a vehicle to which a decorative member according to an embodiment of the present invention is attached.
FIG. 2 is a cross-sectional view of the vehicle taken along line A-A in FIG. 1.
FIG. 3 is a cross-sectional view of a decorative member.
FIG. 4 is a rear view showing another example of a decorative member.
FIG. 5(a) is a front view and FIG. 5(b) is a cross-sectional view that show another example of a decorative member.

### Description of Embodiments

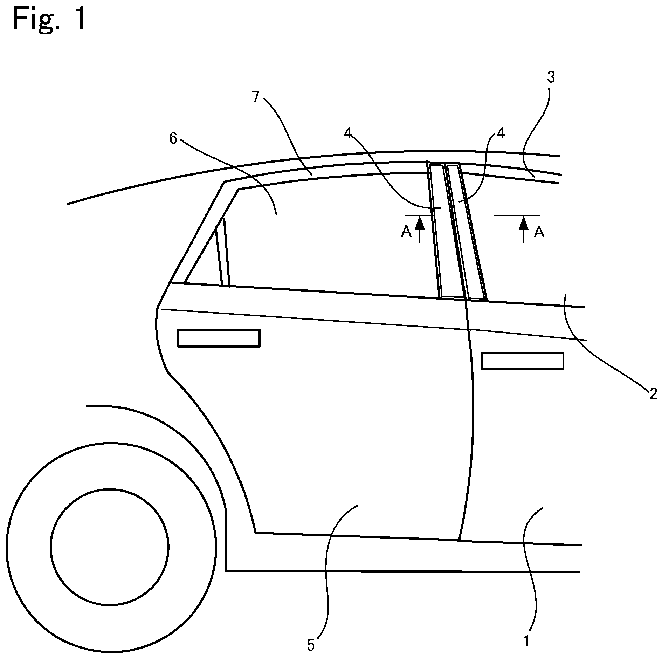

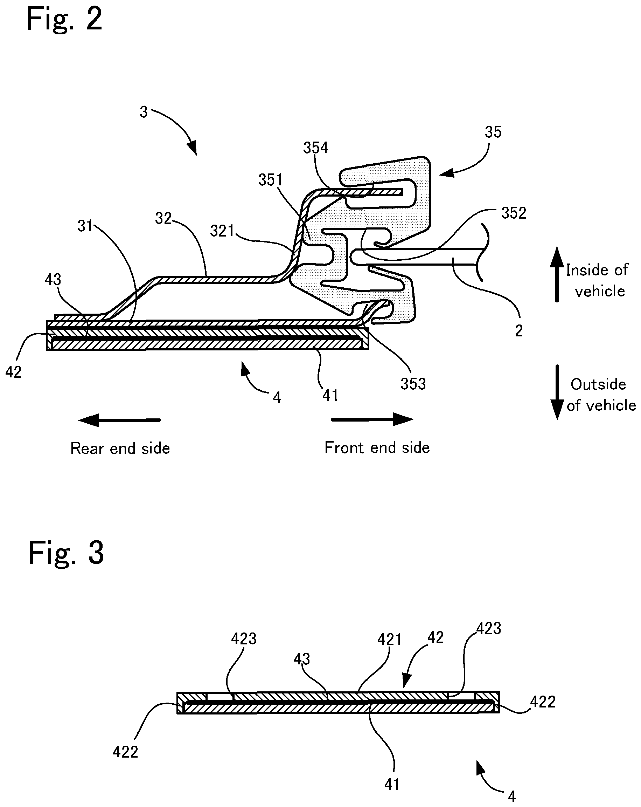

Hereinafter, an embodiment in which a decorative member according to the present invention is mounted on a center pillar of a vehicle will be described with reference to the drawings. FIG. 1 is a diagram of the vicinity of a rear of a vehicle to which the decorative member according to this embodiment is attached, and FIG. 2 is a cross-sectional view thereof taken along line A-A in FIG. 1.

As shown in FIG. 1, decorative members 4 according to this embodiment are disposed at a rear end portion of an upper frame 3 that supports a lifting window 2 on a front door 1 of a side surface of a vehicle body, and a front end portion of an upper frame 7 that supports a lifting window 6 on a rear door 5. That is, these portions are referred to as center pillars, and the decorative members 4 according to this embodiment are respectively attached to the center pillars. The following will first describe the structure of the vicinity of a center pillar, and then describe the decorative member 4.

### 1. Overview of Structure of Door

As shown in FIGS. 1 and 2, the rear end portion of the upper frame 31 that supports the lifting window 2 of the front door 1 includes an outer panel 31 disposed on an outer side of the vehicle, and an inner panel 32 that is disposed on an inner side of the outer panel 31, that is, an inner side of the vehicle. Although the outer panel 31 is substantially flat, the inner panel 32 is bent at some portions. A gap is formed between the front end portion (an end portion of the vehicle on the front side) of the inner panel 32 and the front end side of the outer panel 31, and a glass run 35, which will be described later, is disposed in this gap. On the other hand, the rear end portion of the inner panel 32 is fixed to the rear end portion of the outer panel 31. That is, the inner panel 32 is bent such that the gap formed between the inner panel 32 and the outer panel 31 progressively decreases in a rearward direction. Also, on the front end side of the inner panel 32, a portion having an L-shaped cross-section that is bent about 90 degrees toward the outer panel 31 is formed at a rear end side position located a predetermined length away from the front end portion, and an engagement surface 321 facing the front side of the vehicle is formed due to this portion.

The glass run 35 is made of an elastic material such as rubber, and has a main portion 351 fitted between the outer panel 31 and the inner panel 32. Also, the rear end of the main portion 351 is fitted between two panels 31 and 32 to be in contact with the engagement surface 321 of the inner panel 32. On the other hand, a first recess 352 is formed on the front end side of the main portion 351, and the rear end portion of the lifting window 2 is slidably inserted into the first recess 352. Also, a second recess 353 into which the front end portion of the outer panel 31 is fitted is formed on the outer panel 31 side of the main portion 351, and a third recess 354 into which the front end portion of the inner panel 32 is fitted is formed on the inner panel 32 side. In this manner, the glass run 35 is configured to fill the gap between the two panels 31 and 32, and to slidably support the lifting window 2.

### 2. Decorative member

Next, the decorative member 4 will be described. As shown in FIGS. 1 and 2, the decorative member 4 is shaped like a rectangle extending in the up-down direction overall, and includes a rectangular glass plate 41 and a rectangular support member 42 that supports the glass plate 41. Also, a coating layer 43 is formed on a surface (the second main surface) of the glass plate 41 on the inner side of the vehicle.

### 2-1. Glass Plate

Although various types of glass can be utilized as the glass plate 41, a tempered glass as described below can be used, for example.

### Tempered Glass

A tempered glass may be formed by chemical strengthening a glass article having a composition (referred to as Composition 1 hereinafter) containing
SiO₂ in an amount of 60 mol% to 80 mol%,
Al₂O₃ in an amount of 1 mol% to 10 mol%,
MgO in an amount of 1 mol% to 20 mol%,
CaO in an amount of 0.1 mol% to 15 mol%,
Na₂O in an amount of 10 mol% to 20 mol%, and
K₂O in an amount of 0 mol% to 2 mol%.

More preferably, Composition 2 below may be adopted. A tempered glass may be formed by chemical strengthening a glass article having Composition 2 containing
SiO₂ in an amount of 66 mol% to 72 mol%,
Al₂O₃ in an amount of 4 mol% to 2 mol%,
MgO in an amount of 8 mol% to 15 mol%,
CaO in an amount of 1 mol% to 8 mol%,
Na₂O in an amount of 12 mol% to 16 mol%, and
K₂O in an amount of 0 mol% to 1 mol%,
in which MgO+CaO is in a range of 12 to 17 mol%, and
a mole ratio CaO/ (MgO+CaO) is in a range of 0.1 to 0.4.

Chemical strengthening is performed using various methods and there is no particular limitation thereon, and chemical strengthening may be performed as follows, for example. That is, an ion exchange process is performed in which a glass composition containing sodium is caused to come into contact with a molten salt containing monovalent cations with a larger ion radius than that of sodium ions, preferably potassium ions, and the sodium ions in the glass composition are substituted with the monovalent cations. Accordingly, a compressive stress layer provided with a compressive stress is formed on the surface of the glass plate 41.

A typical example of the molten salt is a potassium nitrate. Although a molten salt mixture of potassium nitrate and sodium nitrate may be used, it is difficult to manage the concentration of the molten salt mixture, and thus a molten salt of potassium nitrate alone is preferable.

Note that the surface compressive stress and compressive stress layer depth in a tempered glass can be controlled by not only the glass composition of this glass article but also by the temperature of a molten salt used in the ion exchange process and the processing time.

In addition, it is possible to use a known glass plate tempered by air cooling, and a glass plate may also be formed using heat absorbing glass, common clear glass, common green glass, or UV green glass. Hereinafter, an example of the composition of clear glass, an example of the composition of heat absorbing glass, and an example of the composition of soda-lime type glass will be shown.

### Clear Glass

SiO₂: 70 to 73 mass%
Al₂O₃: 0.6 to 2.4 mass%
CaO: 7 to 12 mass%
MgO: 1.0 to 4.5 mass%
R₂O: 13 to 15 mass% (R represents an alkali metal)
Total iron oxide (T-Fe₂O₃) in terms of Fe₂O₃: 0.08 to 0.14 mass%

### Heat absorbing glass

The composition of the heat absorbing glass is based on the clear glass composition, and can be obtained by setting, for example, the ratio of the total iron oxide (T-Fe₂O₃) in terms of Fe₂O₃ to 0.4 to 1.3 mass%, the ratio of CeO₂ to 0 to 2 mass%, and the ratio of TiO₂ to 0 to 0.5 mass%, and reducing the skeleton components (mainly, SiO₂ and Al₂O₃) of the glass by the amount of increase in T-Fe₂O₃, CeO₂, and TiO₂.

### Soda-lime based glass

SiO₂: 65 to 80 mass%
Al₂O₃: 0 to 5 mass%
CaO: 5 to 15 mass%
MgO: 2 mass% or more
NaO: 10 to 18 mass%
K₂O: 0 to 5 mass%
MgO + CaO: 5 to 15 mass%
Na₂O + K₂O: 10 to 20 mass%
SO₃: 0.05 to 0.3 mass%
B₂O₃: 0 to 5 mass%
Total iron oxide (T-Fe₂O₃) in terms of Fe₂O₃: 0.02 to 0.03 mass%

Although there is no particular limitation on the thickness of the glass plate 41 according to this embodiment, the thickness of the glass plate 41 is preferably 0.3 to 5.0 mm, and more preferably 0.7 to 1.1 mm. However, in order to realize a predetermined strength, such as a surface compressive stress, which will be described later, and set the thickness of the glass plate 41 to 2.0 mm or less, a glass plate needs to be chemically strengthened as described above. Also, the glass plate 41 may be bent in accordance with the shape of a center pillar to which the glass plate 41 is to be attached.

Also, a surface (the first main surface) of the glass plate 41 on the outer side of the vehicle preferably has a surface compressive stress of 400 MPa or more, for example. This prevents the surface of the glass plate 41 on the outer side of the vehicle from being scratched. Also, when the glass plate 41 is formed by Composition 2 as described above, the surface compressive stress of the surface on the outer side of the vehicle can be set to 500 MPa or more. The surface compressive stress can be measured with use of a surface stress meter "FSM-6000LE" manufactured by Orihara Manufacturing Co., LTD., for example.

### 2-2. Support Member

FIG. 3 is a cross-sectional view of the decorative member at a different position from that in FIG. 2. As shown in FIG. 3, the support member 42 is a plate-shaped member that supports the glass plate 41, and is shaped like a rectangle. More specifically, the support member 42 includes a base portion 421 that supports a surface of the glass plate 41 on the vehicle side, and a peripheral edge portion 422 extending from a peripheral edge of the base portion 421 toward the outer side of the vehicle. Also, the peripheral edge portion 422 extends along the entire peripheral surface of the outer peripheral edge of the glass plate 41.

Also, through-holes 423 are formed at a plurality of positions of the base portion 421 of the support member 42, and a fixing member (not shown) can be fitted to the through-holes 423, and the base portion 421 can be fixed to the outer panel 31. Alternatively, although not shown, a configuration may be adopted in which the surface of the base portion 421 on the inner side of the vehicle is provided with a protrusion, and the protrusion is fitted to a hole formed in the outer panel 31. Also, the decorative member 4 may be fixed to the outer panel 31 with use of an adhesive or the like. Note that there is no particular limitation on a method for fixing the support member 42, and it is possible to use at least one of the above-described various methods as appropriate.

Although there is no particular limitation on the material that constitutes the support member 42, the support member 42 may be made of a resin material such as ABS, AES, PBT, ASA, PMMA, PP, TPO, TPS, PVC, or PU, for example. Note that, if the glass plate 41 is bent, the support member 42 has a shape following the shape thereof.

Although all of the above-described resin materials are thermoplastic materials except for PU, and only PU is a thermosetting material, thermoplastic materials are preferable from the viewpoint of issues regarding the labor of molding, required performance (weather resistance and the like), difficulty in recycling, and the like. Also, although the above-described resin materials can be classified into soft resins (TPO, TPS, and PVC) and hard resins (ABS, AES, PBT, ASA, PMMA, PP, and PU), either type can be adopted. However, it is more preferable to adopt a hard resin.

### 2-3. Coating layer

The coating layer 43 mainly functions to improve mainly a design. The coating layer 43 may have a color or a design such as that of wood grain and marble stone, or have both a color and a design, for example. Also, a coating layer may have a dark color such as a solid black color. Such a coating layer 43 may be formed with use of a known ink through screen printing, ink-jet printing, or the like, for example. In addition, a film having a color or a design, or the like may also be attached to the glass plate 41 as the coating layer 43.

### 2-4. Method for producing decorative member

Although there is no particular limitation on the method for producing the decorative member 4, the decorative member 4 may be produced as follows, for example. First, a glass material is produced using a float method. Also, a glass plate having a shape for a decorative member is cut out from the glass material, and bending is performed according to the necessity. Also, if chemical strengthening is performed, an ion exchange process is performed as described above, for example. Then, the coating layer 43 is formed on a surface of the glass plate 41 on the inner side of the vehicle through printing or the like. The glass plate 41 is then disposed in a molding die, and the support member 42 is molded through insert molding to be integrated with the glass plate 41. In this manner, the decorative member 4 is complete. The decorative member 4 is then attached to a center pillar of a vehicle as appropriate.

In addition, it is possible to perform coupling by embedding a clip in the support member 42 at the time of insert molding, and positioning the clip by coupling the clip to a receiving portion located at a predetermined position of the vehicle body when attaching the decorative member to the vehicle body.

Note that, although the case where the decorative member 4 is attached to the front door 1 has been described above, the decorative member 4 is attached to the center pillar of the rear door 5 in the same manner by changing the shape and the like thereof as appropriate.

### 3. Features

With the decorative member according to this embodiment, the following effects can be achieved.
(1) Vehicle exteriors are exposed to sunlight for a long period of time or are exposed to wind and rain. Thus, if a decorative member is made of a resin material, there is a risk that the decorative member will significantly degrade over time, become discolored, or deform. Thus, there is a problem in that the appearance will deteriorate. In contrast, a surface of the decorative member 4 according to this embodiment on an outer side of the vehicle is constituted by the glass plate 41, and thus discoloration and the like are less likely to occur, compared to a resin material, and it is possible to inhibit the deterioration of the appearance even if the decorative member 4 is used for a long period of time. Also, if a decorative member is made of a resin material, the decorative member is likely to be scratched by a brush of a vehicle washer, whereas, if a glass plate is formed by tempered glass in particular, it is possible to prevent a decorative member from being scratched.
(2) Because a surface of the decorative member 4 on the inner side of the vehicle that is attached to the outer panel 31 is made of a resin material, the decorative member 4 can be easily handled, and can be easily attached to the outer panel 31.
(3) Because the support member 42 is provided with the peripheral edge portion 422 extending along the outer peripheral edge of the glass plate 41, it is possible to prevent the outer peripheral edge (an end surface) of the glass plate 41 from being damaged. It is possible to prevent the glass plate 41 from being cracked or chipped off, for example.
(4) Because a center pillar is a portion disposed between the lifting window 2 of the front door 1 and the lifting window 6 of the rear door 5, if a surface of the decorative member 4 on the outer side of the vehicle that is disposed in this portion is constituted by the glass plate 41, a region extending from the lifting window 2 of the front door 1 to the lifting window 6 of the rear door 5 is constituted by glass that is continuous in the front-rear direction. Thus, it is possible to improve a sense of unity of a design, improve texture compared to that of a resin material, and impart a sense of luxuriousness.
(5) The rigidity of the decorative member 4 can be increased by using the glass plate 41, than being made of only a resin material. As a result, it is possible to prevent deformation of the decorative member 4.
(6) Because the coating layer 43 is formed on the surface of the glass plate 41 on the inner side of the vehicle, a design and the like of the coating layer 43 are visible from the outer side of the vehicle via the glass plate 41. Thus, it is possible to improve the design of the decorative member 4. In particular, the coating layer 43 is formed on the surface of the glass plate 41 on the inner side of the vehicle, and thus is not in direct contact with wind and rain coming from the outside of a vehicle, thus preventing degradation. Also, the coating layer 43 is covered by the support member 42 on the inner side of the vehicle, and thus the coating layer can be protected from an external force applied from the inner side of the vehicle.
(7) Although the glass plate 41 usually needs to have a thickness of 3 mm or more when the glass plate 41 is formed by glass tempered by air cooling and the weight thereof increases, if the glass plate 41 is formed by chemically tempered glass, it is possible to set the thickness of the glass plate 41 to less than 3 mm, and thus to reduce the weight of a decorative member.

### 4. Variations

Although an embodiment of the present invention has been described above, the present invention is not limited to the above-described embodiment, and various changes can be made without departing from the gist of the invention. Also, the following variations can be combined as appropriate.

### 4-1

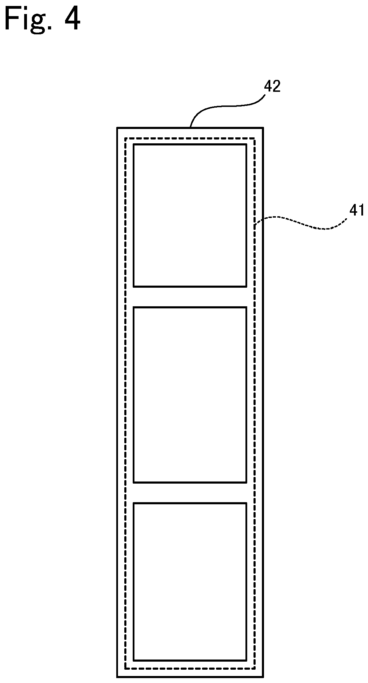

There is no particular limitation on the shapes of the glass plate 41 and the support member 42, and they can have various shapes. Also, the support member 42 does not necessarily cover the entire surface of the glass plate 41 on the inner side of the vehicle, and may have a shape covering a portion thereof. As shown in FIG. 4, the support member 42 may be formed in a frame shape, for example. Also, the peripheral edge portion 422 of the support member 42 is not necessarily formed along the entire peripheral surface of the outer peripheral edge of the glass plate 41, and may be formed along a portion thereof. Also, a configuration may be adopted in which no peripheral edge portion 422 is provided. Also, the above-described configuration of the center pillar to which a decorative member is attached is merely an example, and the decorative member may be attached to a center pillar having another structure.

### 4-2

It is possible to provide the coating layer 43 to not only a surface on the inner side of the vehicle but also a surface on the outer side of the vehicle. In this case, it is possible to apply a known coating for not only improving a design but also for water repellency, oil repellency, and antifouling, for example. However, the coating layer 43 is not essential, and may be omitted depending on applications.

### 4-3

The coating layer 43 may be used as a touch sensor by forming the coating layer 43 with use of a transparent conductive film. Accordingly, it is possible to provide a capacitive fingerprint sensor in the coating layer 43, and perform various operations such as locking and unlocking a vehicle, for example.

### 4-4

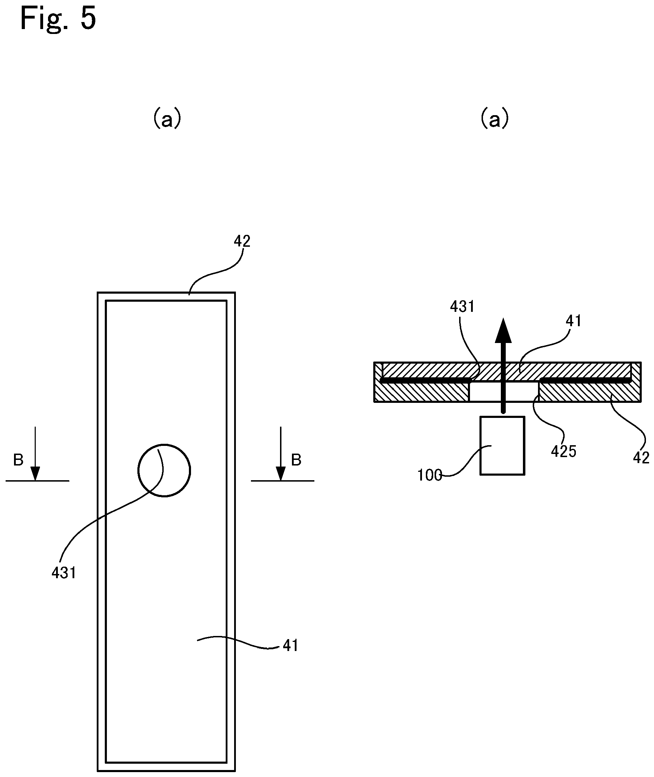

As shown in FIG. 5, a configuration may be adopted in which a through-hole portion 431 that is not coated is formed in the coating layer 43, a through-hole 425 is formed in the support member 42 at a position corresponding to that of the through-hole portion, and thus a camera 100 built into the upper frame 3 can capture images of the outside of the vehicle. Because the glass plate 41 is transparent, images of the outside of the vehicle can be captured by the camera 100, and the camera 411 can be protected by the glass plate 41. As a result, it is possible to perform face authentication, fingerprint authentication, QR code (registered trademark) and bar code authentication, and the like of the users of the vehicle, and it is possible to open and close the doors without a key. Also, capturing of images of the outside of the vehicle can contribute to crime prevention and automated driving. Furthermore, it is possible to monitor an environment outside the vehicle, with use of various sensors such as a rain sensor and a temperature sensor, in addition to cameras.

### 4-5

At least one of the surface of the glass plate 41 on the inner side of the vehicle and the surface thereof on the outer side of the vehicle can be covered by a protective layer. The protective layer functions to prevent fragments from scattering when the glass plate 41 is broken, for example. In particular, if the decorative member 4 is provided near the height of the face, hands, or limbs of an occupant of an automobile, such as an upper frame of a door, it is preferable to provide a protective layer in order to prevent fragments from scattering.

The protective layer may be formed by a resin film and attached to a glass plate, or the protective layer may be formed by applying resin coating liquid to a glass plate, for example.

Note that, although timing at which a protective layer is provided can be determined as appropriate, if the support member 42 is formed through insert molding as described above, for example, the protective layer may be unable to withstand the temperature (e.g., about 400°C), and thus, if a protective layer having a melting temperature that is lower than the molding temperature is used, it is preferable to provide the protective layer on the glass plate 41 after the support member 42 is formed through insert molding.

### 4-6

The decorative member 4 according to the present invention may be attached to a portion other than the center pillars. Specifically, it is possible to attach the decorative member 4 to various portions, for example, other portions on the exterior of the vehicle, such as the front grill, fenders, bumpers, and the rear of the vehicle by changing the shapes and the like thereof.

### List of Reference Numerals

- 41: Glass plate
- 42: Support member
- 43: Coating layer

## Claims

1. A decorative member that is attachable to an outer surface of a vehicle, the decorative member comprising:
a glass plate that has a first main surface that faces an outer side of the vehicle, and a second main surface that faces an inner side of the vehicle; and
a support member that is attached to at least the second main surface of the glass plate and is made of a resin material,
wherein the support member is configured to be attachable to the outer surface of the vehicle.

2. The decorative member according to claim 1,
wherein the glass plate is a tempered glass, and
the first main surface of the glass plate has a compressive stress of 400 MPa or more.

3. The decorative member according to claim 2,
wherein the glass plate is formed by chemical strengthening a glass article having a composition containing
SiO₂ in an amount of 60 mol% to 80 mol%,
Al₂O₃ in an amount of 1 mol% to 10 mol%,
MgO in an amount of 1 mol% to 20 mol%,
CaO in an amount of 1 mol% to 15 mol%,
Na₂O in an amount of 10 mol% to 20 mol%, and
K₂O in an amount of 0.1 mol% to 2 mol%.

4. The decorative member according to any of claims 1 to 3, wherein the glass plate has a thickness of 2 mm or less.

5. The decorative member according to any of claims 1 to 4, further comprising
a coating layer formed on the second main surface of the glass plate,
wherein the glass plate is transparent.

6. The decorative member according to claim 5,
wherein the coating layer is formed to have a design, and is configured to be visible from the outside of the vehicle via the glass plate.

7. The decorative member according to claim 5 or 6,
wherein a portion of the coating layer is provided with a through-hole portion that is not coated,
a through-hole is formed in the support member to correspond to the through-hole portion, and
a camera provided in the vehicle is configured to be capable of capturing an image of the outside of the vehicle via the through-hole portion and the through-hole.

8. The decorative member according to claim 5,
wherein at least a portion of the coating layer is formed by a conductive film, and
the decorative member is configured to be capable of authenticating a fingerprint of a finger of a person that is in contact with the first main surface of the glass plate, through the conductive film.

9. The decorative member according to any of claims 1 to 8,
wherein the support member is formed to be in contact with at least a portion of an end surface of the glass plate that joins the first main surface and the second main surface.

10. The decorative member according to any of claims 1 to 9,
wherein the glass plate and the support member are formed as a single body.

11. The decorative member according to any of claims 1 to 10,
wherein the support member is configured to be attachable to a pillar of the vehicle.
